# EUROPÄISCHE PATENTSCHRIFT

(11) **EP 3 800 487 B1**
(45) Veröffentlichungstag und Bekanntmachung des Hinweises auf die Patenterteilung: **20.05.2026**
(21) Anmeldenummer: 19200987.6
(22) Anmeldetag: 02.10.2019
(51) Int. Cl.: G01S 17/86, G01S 7/48, G01S 7/487, G01S 17/10, G01C 21/16, G01S 17/931

(54) **VORRICHTUNG ZUR DISTANZMESSUNG**
DEVICE FOR MEASURING DISTANCE
DISPOSITIF DE MESURE DE LA DISTANCE

(43) Veröffentlichungstag der Anmeldung: 07.04.2021
(73) Patentinhaber: Leuze electronic GmbH + Co. KG, 73277 Owen/Teck (DE)
(72) Erfinder: Köbel, Herbert, 73277 Owen/Teck (DE); Sanzi, Dr., Friedrich, 73230 Kirchheim/Teck (DE)
(74) Vertreter: Ruckh, Rainer Gerhard

(56) Entgegenhaltungen:
- YU XIANG ET AL: "Multi-sensor Fusion Height Prediction Algorithm Based on Kalman Filtering", 2019 CHINESE CONTROL CONFERENCE (CCC), TECHNICAL COMMITTEE ON CONTROL THEORY, CHINESE ASSOCIATION OF AUTOMATION, 27 July 2019 (2019-07-27), pages 3016 - 3022, XP033635399, DOI: 10.23919/CHICC.2019.8866451
- ARIANTE GENNARO ET AL: "UAS for positioning and field mapping using LIDAR and IMU sensors data: Kalman filtering and integration", 2019 IEEE 5TH INTERNATIONAL WORKSHOP ON METROLOGY FOR AEROSPACE (METROAEROSPACE), IEEE, 19 June 2019 (2019-06-19), pages 522 - 527, XP033634032, DOI: 10.1109/METROAEROSPACE.2019.8869696

## Beschreibung

Die Erfindung betrifft eine Vorrichtung zur Distanzmessung und ein Verfahren zur Durchführung von Distanzmessungen.

Derartige Vorrichtungen sind generell von Distanzsensoren gebildet. Insbesondere können derartige Distanzsensoren als optische Sensoren ausgebildet sein. Zur Durchführung von Distanzmessungen weist der Distanzsensor einen Sendelichtstrahlen emittierenden Sender und einen Empfangslichtstrahlen empfangenden Empfänger auf. Die Distanzmessungen können zum Beispiel nach einem Phasenmessverfahren oder nach einem Impuls-Laufzeit-Verfahren erfolgen, wobei in letzterem Fall der Sender des Distanzsensors Sendelichtstrahlen in Form von Sendelichtimpulsen emittiert. In beiden Fällen wird als Maß für die Distanz eines Objekts die Lichteinheit der Sendelichtstrahlen vom Distanzsensor zum Objekt gemessen.

Wesentliche Anforderungen für derartige Vorrichtungen sind, dass mit diesem möglichst exakte Distanzmessungen durchführbar sind, wobei insbesondere auch eine schnelle Reaktionszeit gefordert wird, das heißt mit der Vorrichtung müssen in schnellen Folgen Distanzmesswerte generiert werden.

Hierzu sind entsprechend empfindliche Bauelemente erforderlich, insbesondere Empfänger und diesen nachgeordnete Verstärker. Die damit generierten Distanzmesswerte sind generell mit einem Messwertrauschen behaftet, was die Genauigkeit der Distanzmessungen begrenzt.

Prinzipiell ist es zur Verbesserung der Qualität der Distanzmesswerte bekannt, geeignete Filter einzusetzen. Derartige Filter können beispielsweise als Tiefpassfilter, insbesondere als Mittelwertfilter ausgebildet sein. Bei dem Mittelwert wird durch eine Mittelung über eine große Anzahl von Distanzmesswerten gemittelt, wodurch das Messwertrauschen reduziert werden kann.

Bei dynamischen Anwendungen, bei welchen der Distanzsensor schnell relativ zu detektierenden Objekten bewegt wird, ist das Messwertrauschen nur von untergeordneter Bedeutung für die Genauigkeit von ermittelten Distanzmesswerten. Vielmehr erhält man bei derartigen Anwendungen insbesondere dann wenn Tiefpass- oder Mittelwert-Filter zur Filterung von Distanzmesswerten eingesetzt werden ein Nachlaufen des Distanzmesswerts bezüglich der tatsächlichen Distanz.

In YU XIANG ET AL: "Multi-sensor Fusion Height Prediction Algorithm Based on Kalman Filtering", 2019 CHINESE CONTROL CONFERENCE (CCC), TECHNICAL COMMITTEE ON CONTROL THEORY, CHINESE ASSOCIATION OF AUTOMATION, 27. Juli 2019 (2019-07-27), Seiten 3016-3022, XP033635399, ist ein System zur Bestimmung der Flughöhe eines unbemannten Flugsystems beschrieben. Dieses System umfasst einen laserbasierten Distanzsensor, einen Beschleunigungssensor und ein Barometer. Die Messwerte dieser Sensoren werden mittels eines Kalman Filters zur Bestimmung der Flughöhe verarbeitet.

In ARIANTE GENNARO ET AL: "UAS for positioning and field mapping using LIDAR and IMU sensors data: Kalman filtering and integration", 2019 IEEE 5TH INTERNATIONAL WORKSHOP ON METROLOGY FOR AEROSPACE (METROAEROSPACE), IEEE, 19. Juni 2019 (2019-06-19), Seiten 522-527, XP033634032, ist ein unbekanntes Flugsystem beschrieben. Zur Positionierung des Flugsystems werden Messwerte eines Beschleunigungssensors und eines LIDAR Sensors ausgewertet. Die Messwerte des Beschleunigungssensors werden mit einem Kalman Filter gefiltert.

Der Erfindung liegt die Aufgabe zugrunde eine Vorrichtung und ein Verfahren bereitzustellen, welche bei unterschiedlichen Einsatzbedingungen eine genaue Distanzmessungen ermöglichen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Vorrichtung zur Durchführung mit einem Distanzsensor und einem Beschleunigungssensor, wobei in einem Takt T1 mit dem Distanzsensor Distanzsignale d(K-T1) und in einem Takt T2 mit dem Beschleunigungssensor Beschleunigungssignale b(K·T2) generiert werden, und mit einer Fusionseinheit, welche zur Generierung rauschreduzierter Distanzmesswerte D (K·T3) in einem Takt T3 ausgebildet ist, in dem in dieser zeitgleich ermittelte Distanzsignale d(K-T1) und Beschleunigungssignale b(K-T2) verknüpft werden. Dabei ist wenigstens ein Filter vorgesehen, mittels dessen die Distanzsignale d(K-T1) und die Beschleunigungssignale b(K-T2) auf einen gemeinsamen Takt T3 gebracht werden und dann zu den rauschreduzierten Distanzmesswerten D (K·T3) mit dem Takt T3 zusammengeführt sind. Dabei sind alle Takte T1, T2, T3 unterschiedlich.

Die Erfindung betrifft weiterhin ein Verfahren zur Durchführung von Distanzmessungen.

Erfindungsgemäß sind alle Takte T1, T2, T3 unterschiedlich. Entsprechend werden im Distanzsensor Distanzsignale d(K-T1) mit einem Takt T1 generiert, der sich von Takt T2 der Beschleunigungssignale b(K-T2) des Beschleunigungssensors unterscheidet. Dabei ist wenigstens ein Filter vorgesehen, mittels dessen die Distanzsignale d(K-T1) und die Beschleunigungssignale b(K-T2) auf einen gemeinsamen Takt T3 gebracht werden und dann zu den rauschreduzierten Distanzmesswerten D (K·T3) mit dem Takt T3 zusammengeführt sind.

Insbesondere ist der Filter ein Interpolationsfilter.

Durch den zusätzlichen Einsatz eines Beschleunigungssensors und die Fusion, das heißt die zeitsynchrone Verknüpfung der Beschleunigungssignale dieses Beschleunigungssensors mit dem Distanzsignal des Distanzsensors, wird auf überraschend einfache Weise die Genauigkeit der Distanzmesswerte sowohl bei statischen als auch bei dynamischen Anwendungen erheblich gesteigert, das heißt es wird eine hohe Messwertgenauigkeit unabhängig davon erzielt, ob sich die Vorrichtung nicht oder langsam oder aber mit hoher Geschwindigkeit relativ zu detektierenden Objekten bewegt.

Die Fusionseinheit, die für die Fusion der Distanzsignale und Beschleunigungssignale eingesetzt wird, ist als Filtereinheit ausgebildet. Prinzipiell kann diese Filtereinheit von einem Mittelwert-Filter gebildet sein. Besonders vorteilhaft ist die Filtereinheit als Kalman-Filter ausgebildet.

Mit der erfindungsgemäß durchgeführten Fusion wird einerseits bei geringen Geschwindigkeiten zwischen der Vorrichtung und einem zu detektierenden Objekt das Messwertrauschen stark reduziert. Andererseits wird bei hohen Relativgeschwindigkeiten zwischen der Vorrichtung und einem zu detektierenden Objekt ein Nachlaufen der Distanzmesswerte verhindert, wodurch eine hohe Genauigkeit und auch zeitliche Dynamik bei den Distanzmessungen erzielt wird.

Die erfindungsgemäße Vorrichtung kann somit gleichermaßen bei statischen und dynamischen Anwendungen eingesetzt werden. Ein Beispiel für eine statische Anwendung ist eine feststehende Vorrichtung, die gegen ein definiertes, ebenfalls bestehendes Messobjekt Distanzmessungen durchführt. Ein Beispiel für eine dynamische Anwendung ist eine auf einem Fahrzeug angeordnete Vorrichtung, wobei diese zum Beispiel gegen ein feststehendes Messobjekt Distanzmessungen durchführt. Die Distanzmessungen gegen das Messobjekt können insbesondere für Positionsüberwachungen eingesetzt werden.

Vorteilhaft kann die erfindungsgemäße Vorrichtung auch für Positionierungsaufgaben eingesetzt werden.

Gemäß einer vorteilhaften Ausführungsform der Erfindung ist der Distanzsensor der erfindungsgemäßen Vorrichtung als optischer Sensor ausgebildet. Dieser weist einen Sendelichtstrahlen emittierenden Sender und einen Empfangslichtstrahlen empfangenden Empfänger auf. Prinzipiell können mit diesem optischen Sensor Distanzmessungen nach einem Triangulationsverfahren durchgeführt werden. Besonders vorteilhaft erfolgen die Distanzmessungen nach einem Impuls-Laufzeit-Verfahren oder einem Phasenmessverfahren. In diesem Fall kann der Distanzsensor auch als Radarsensor oder dergleichen ausgebildet sein.

Gemäß einer konstruktiv vorteilhaften Ausgestaltung der erfindungsgemäßen Vorrichtung sind deren Komponenten in einem Gehäuse angeordnet.

Die Vorrichtung bildet somit eine kompakte Baueinheit.

Vorteilhaft weist die Vorrichtung eine Steuer- und Auswerteeinheit auf, die einerseits zur Steuerung der von Sensorkomponenten, insbesondere des Senders dient. Weiterhin wird diese zur Auswertung von Empfangssignalen des Empfängers eingesetzt.

Die Erfindung wird im Folgenden anhand der Zeichnungen erläutert. Es zeigen:
- Figur 1:: Schematische Darstellung eines Ausführungsbeispiels der erfindungsgemäßen Vorrichtung.
- Figur 2:: Anordnung der Vorrichtung an einem Fahrzeug.
- Figur 3:: Zeitdiagramm von Distanzwerten während der Fahrt des Fahrzeugs für die Anordnung gemäß Figur 2.
- Figur 4:: Ergebnisse der Messwertfilterung für die erfindungsgemäße Vorrichtung bei Stillstand des Fahrzeugs.
- Figur 5:: Zeitabhängige Distanzwerte bei hoher Geschwindigkeit des Fahrzeugs.

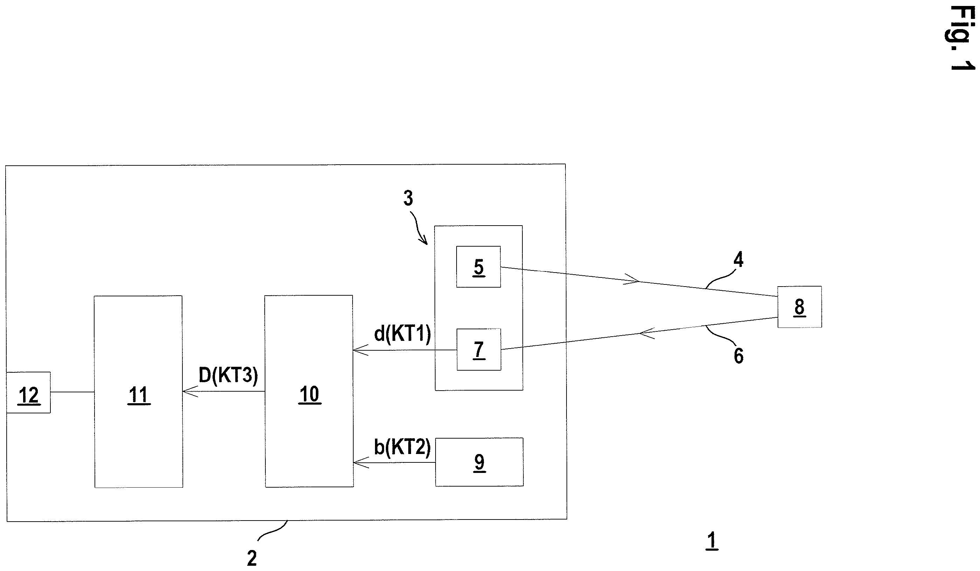

Figur 1 zeigt ein Ausführungsbeispiel der erfindungsgemäßen Vorrichtung 1. Die Komponenten der Vorrichtung 1 sind in einem Gehäuse 2 integriert.

Die Vorrichtung 1 umfasst einen als optischen Sensor ausgebildeten Distanzsensor 3. Dieser Distanzsensor 3 weist einen Sendelichtstrahlen 4 emittierenden Sender 5 und einen Empfangslichtstrahlen 6 empfangenden Empfänger 7 auf. Der Sender 5 kann von einer Laserdiode, der Empfänger 7 von einer Photodiode gebildet sein. Mit dem Distanzsensor 3 erfolgen im vorliegenden Fall Distanzmessungen nach einem Impuls-Laufzeit-Verfahren. Hierzu emittiert der Sender 5 Sendelichtstrahlen 4 in Form von Sendelichtimpulsen. Zur Bestimmung der Distanz eines Objekts 8 zur Vorrichtung 1 wird die Laufzeit der Sendelichtimpulse vom Sender 5 zurück zum Empfänger 7 ausgewertet. Hierzu kann dem Empfänger 7 eine nicht dargestellte Rechnereinheit zugeordnet sein.

Weiterhin umfasst die Vorrichtung 1 einen Beschleunigungssensor 9, der bevorzugt Beschleunigungen in allen drei Raumrichtungen erfassen kann.

Mit dem Distanzsensor 3 werden innerhalb eines vorgegebenen Takts T Distanzsignale d(K·T), wobei k= 1, 2, 3, .... generiert. Im selben Takt T kann der Beschleunigungssensor 9 Beschleunigungssignale b(K·T) generieren, wobei k= 1, 2, 3, ..... Erfindungsgemäß jedoch sind die Takte der Distanzsignale und Beschleunigungssignale unterschiedlich.

Die Distanzsensoren 3 d(K·T) und Beschleunigungssensoren 9 b(K·T) werden erfindungsgemäß einer Fusionseinheit 10 in Form einer Filtereinheit zugeführt. Dort erfolgt eine Fusion der Distanzsignale und Beschleunigungssignale derart, dass die jeweiligen Signale d(K·T) und b(K·T) miteinander verknüpft werden.

Die Filtereinheit ist bevorzugt als Kalman-Filter ausgebildet. Alternativ kann die Filtereinheit von einem Mittelwert-Filter gebildet sein.

Am Ausgang 12 der Fusionseinheit 10 werden gefilterte Distanzmesswerte D(K·T) erhalten, die einer Steuer- und Auswerteeinheit 11 zugeführt werden, die von einem Prozessor oder dergleichen gebildet ist. Die Steuer- und Auswerteeinheit 11 dient zur Steuerung der Sensorkomponenten, das heißt des Distanzsensors 3 und des Beschleunigungssensors 9. Weiterhin wird in Abhängigkeit der ermittelten Distanzmesswerte ein Objektfeststellungssignal generiert und über einen Ausgang 12 ausgegeben. Das Objektfeststellungssignal kann direkt von einem Distanzwert gebildet sein oder von diesem abgeleitet sein. Beispielsweise kann angegeben werden, wenn ein zu detektierendes Objekt 8 von einer Sollposition erfasst wird. Derartige Objektfeststellungssignale können insbesondere zur Positionierungsaufgaben verwendet werden.

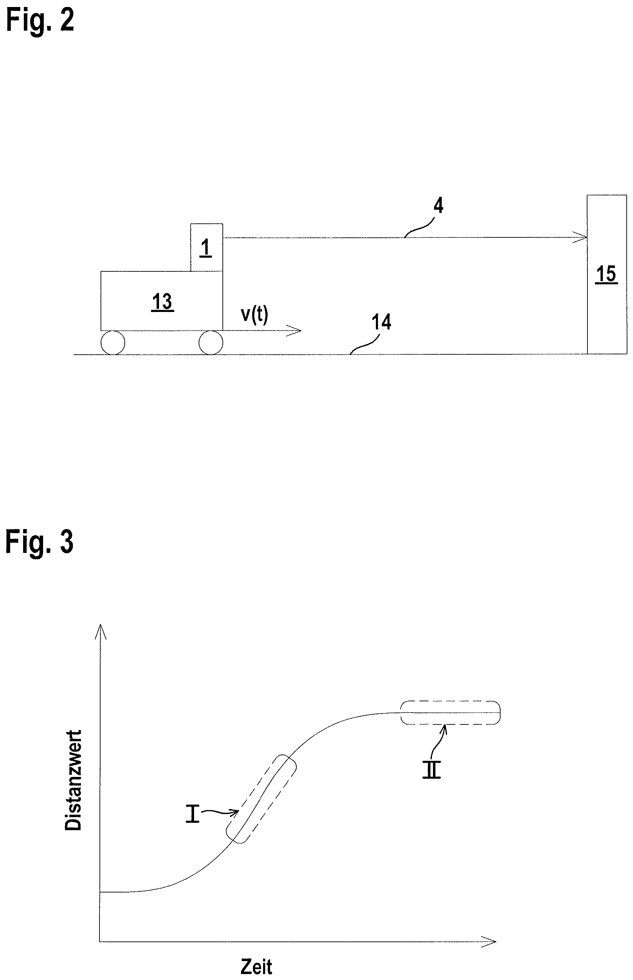

Figur 2 zeigt eine Applikation für die Vorrichtung 1 gemäß Figur 1. Die Vorrichtung 1 ist auf einem Fahrzeug 13 angeordnet, das auf einer Fahrbahn 14 mit einer Geschwindigkeit v(t) verfahren werden kann. Mit dem Distanzsensor 3 der Vorrichtung 1 wird fortlaufend die Distanz der Vorrichtung 1 und damit des Fahrzeugs 13 zu einem stationär angeordneten Messobjekt 15 bestimmt.

Figur 3 zeigt qualitativ die Zeitabhängigkeit von mit der Vorrichtung 1 ermittelten Distanzwerten für aktuell ermittelte Distanzen zum Messobjekt 15, wenn sich das Fahrzeug 13 vom Objekt 8 weg bewegt.

Im Bereich I bewegt sich das Fahrzeug 13 mit etwa konstanter Geschwindigkeit. Im Bereich II ist das Fahrzeug 13 zum Stillstand gekommen.

Im Stillstand des Fahrzeugs 13 (Bereich II) wird mit der Filtereinheit das Messwertrauschen in den Distanzsignalen reduziert, in dem diese mit den Beschleunigungssignalen fusioniert werden.

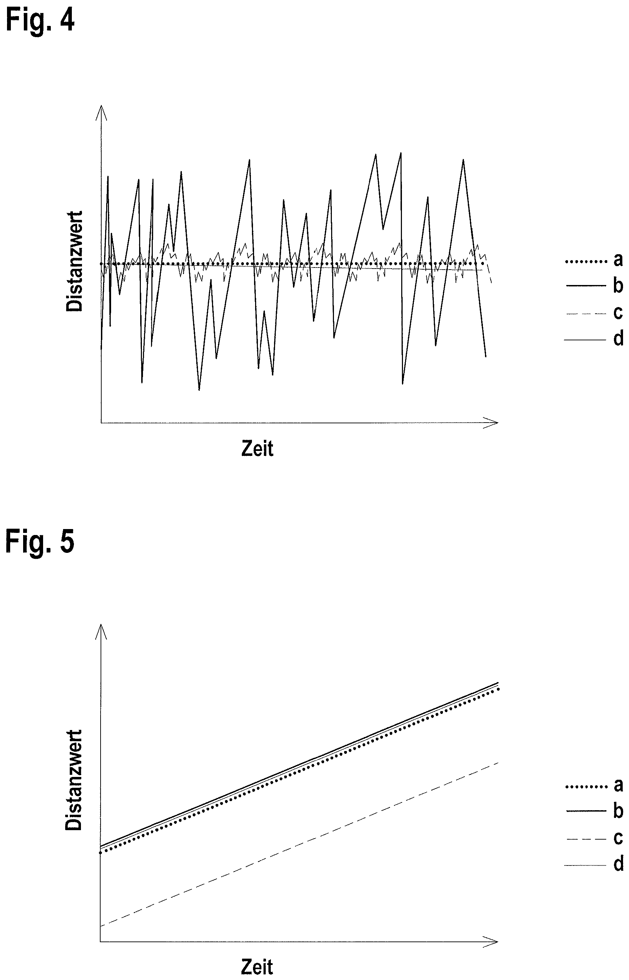

Figur 4 zeigt die Ergebnisse von Filterungen im Bereich II. Dort sind mit a die idealen Distanzwerte bezeichnet. Mit b sind die verrauschten Distanzsignale d(K·T) bezeichnet. Mit c sind die mittels der Fusionseinheit 10 gefilterten Distanzmesswerte D(K·T) bezeichnet für den Fall, dass die Fusionseinheit 10 von einem Mittelwert-Filter gebildet ist. Mit d sind die Distanzmesswerte D (K·T) bezeichnet, die mit einer Filterung mittels einer als Kalman-Filter ausgebildeten Fusionseinheit 10 erhalten werden.

Wie Figur 4 zeigt, liefert die Filterung mit dem Kalman-Filter bessere, das heißt weniger verrauschte Distanzmesswerte als bei einer Filterung mit einem Mittelwert-Filter.

Figur 5 zeigt die Ergebnisse von Filterungen von Distanzsignalen im Bereich 1, wobei die Bezeichnungen a, b, c, d, der einzelnen Messwerte den Bezeichnungen a, b, c, d gemäß Figur 4 entsprechen.

Wie Figur 5 zeigt, wird bei einer Filterung der Distanzsignale d(K·T) mit einem Mittelwert-Filter ein Versatz der gefilterten Distanzmesswerte zu den idealen Distanzwerten erhalten, während die mit einem Kalman-Filter gefilterten Distanzmesswert nahezu den idealen Distanzwerten entsprechen.

### Bezugszeichenliste

- (1): Vorrichtung
- (2): Gehäuse
- (3): Distanzsensor
- (4): Sendelichtstrahl
- (5): Sender
- (6): Empfangslichtstrahl
- (7): Empfänger
- (8): Objekt
- (9): Beschleunigungssensor
- (10): Fusionseinheit
- (11): Steuer- und Auswerteeinheit
- (12): Ausgang
- (13): Fahrzeug
- (14): Fahrbahn
- (15): Messobjekt

## Patentansprüche

1. Vorrichtung (1) zur Distanzmessung mit einem Distanzsensor (3) und einem Beschleunigungssensor (9), wobei in einem Takt T1 mit dem Distanzsensor (3) Distanzsignale d(K-T1) und in einem Takt T2 mit dem Beschleunigungssensor (9) Beschleunigungssignale b(K-T2) generiert werden, und mit einer Fusionseinheit (10), welche zur Generierung rauschreduzierter Distanzmesswerte D(K-T3) in einem Takt T3 ausgebildet ist, in dem in dieser Distanzsignale d(K-T1) und Beschleunigungssignale b(K-T2) verknüpft werden, **dadurch gekennzeichnet, dass** wenigstens ein Filter vorgesehen ist, mittels dessen die Distanzsignale d (K·T1) und die Beschleunigungssignale b(K·T2) auf einen gemeinsamen Takt T3 gebracht werden und dann zu den rauschreduzierten Distanzmesswerten D(K-T3) mit dem Takt T3 zusammengeführt sind, wobei alle Takte T1, T2, T3 unterschiedlich sind.

2. Vorrichtung (1) nach Anspruch 1, **dadurch gekennzeichnet, dass** die Fusionseinheit (10) eine Filtereinheit ist.

3. Vorrichtung (1) nach Anspruch 2, **dadurch gekennzeichnet, dass** die Filtereinheit ein auf einen Zustandsraum basierenden Filter ist.

4. Vorrichtung (1) nach Anspruch 3, **dadurch gekennzeichnet, dass** die Filtereinheit ein Kalman-Filter ist.

5. Vorrichtung (1) nach einem der Ansprüche 1 - 4, **dadurch gekennzeichnet, dass** der Filter, mittels dessen die Distanzsignale d(K·T1) und die Beschleunigungssignale b(K·T2) auf einen gemeinsamen Takt T3 gebracht werden, ein Interpolationsfilter ist.

6. Vorrichtung (1) nach einem der Ansprüche 1 - 5, **dadurch gekennzeichnet, dass** der Distanzsensor (3) ein optischer Sensor ist.

7. Vorrichtung (1) nach einem der Ansprüche 1 - 6, **dadurch gekennzeichnet, dass** ein nach einem Impuls-Laufzeit-Verfahren, einem Phasenmessverfahren oder nach einem Triangulationsverfahren arbeitender Distanzsensor (3) vorgesehen ist.

8. Vorrichtung (1) nach einem der Ansprüche 1 - 7, **dadurch gekennzeichnet, dass** deren Komponenten in einem Gehäuse (2) angeordnet sind.

9. Vorrichtung (1) nach einem der Ansprüche 1 - 8, **dadurch gekennzeichnet, dass** diese eine Steuer- und Auswerteeinheit (11) aufweist.

10. Verfahren zur Durchführung von Distanzmessungen mittels einer Vorrichtung (1) mit einem Distanzsensor (3) und einem Beschleunigungssensor (9), wobei in einem Takt T1 mit dem Distanzsensor (3) Distanzsignale d(K·T1) und in einem Takt T2 mit dem Beschleunigungssensor (9) Beschleunigungssignale b(K-T2) generiert werden, und mit einer Fusionseinheit (10), welche zur Generierung rauschreduzierter Distanzmesswerte D(K·T3) in einem Takt T3 ausgebildet ist, in dem in dieser Distanzsignale d(K-T1) und Beschleunigungssignale b(K·T2) verknüpft werden, **dadurch gekennzeichnet, dass** wenigstens ein Filter vorgesehen ist, mittels dessen die Distanzsignale d(K-T1) und die Beschleunigungssignale b(K·T2) auf einen gemeinsamen Takt T3 gebracht werden und dann zu den rauschreduzierten Distanzmesswerten D(K·T3) mit dem Takt T3 zusammengeführt sind, wobei alle Takte T1, T2, T3 unterschiedlich sind.

11. Verfahren nach Anspruch 10, **dadurch gekennzeichnet, dass** die Vorrichtung (1) in einer statischen Messanordnung eingesetzt wird.

12. Verfahren nach Anspruch 10, **dadurch gekennzeichnet, dass** die Vorrichtung (1) in einer dynamischen Messanordnung eingesetzt wird.

13. Verfahren nach einem der Ansprüche 10 - 12, **dadurch gekennzeichnet, dass** die von der Vorrichtung (1) generierten Distanzmesswerte für Positionierungen eingesetzt werden.

## Claims

1. Device (1) for measuring distance comprising a distance sensor (3) and an acceleration sensor (9), wherein distance signals d(K-T1) are generated in a cycle T1 using the distance sensor (3) and acceleration signals b(K-T2) are generated in a cycle T2 using the acceleration sensor (9) are generated, and comprising a fusion unit (10) which is configured to generate noise-reduced distance measurement values D(K-T3) in a clock cycle T3, in which the distance signals d(K-T1) and the acceleration signals b(K-T2) are combined, **characterised in that** at least one filter is provided, by means of which the distance signals d(K-T1) and the acceleration signals b(K-T2) are synchronised to a common clock T3 and are then combined with the clock T3 to form the noise-reduced distance measurement values D(K-T3), wherein all clocks T1, T2, T3 are different.

2. Device (1) according to claim 1, **characterised in that** the fusion unit (10) is a filter unit.

3. Device (1) according to claim 2, **characterised in that** the filter unit is a state-space filter.

4. Device (1) according to claim 3, **characterised in that** the filter unit is a Kalman filter.

5. Device (1) according to one of claims 1 to 4, **characterised in that** the filter by means of which the distance signals d(K-T1) and the acceleration signals b(K-T2) are synchronised to a common clock T3 is an interpolation filter.

6. Device (1) according to one of claims 1 to 5, **characterised in that** the distance sensor (3) is an optical sensor.

7. Device (1) according to one of claims 1 to 6, **characterised in that** a distance sensor (3) operating according to a pulse-time-of-flight method, a phase measurement method or a triangulation method is provided.

8. Device (1) according to any one of claims 1 to 7, **characterised in that** its components are arranged in a housing (2).

9. Device (1) according to any one of claims 1 to 8, **characterised in that** it comprises a control and evaluation unit (11).

10. Method for performing distance measurements using a device (1) comprising a distance sensor (3) and an acceleration sensor (9), wherein distance signals d(K-T1) are generated in a cycle T1 by the distance sensor (3) and acceleration signals b(K-T2) are generated in a cycle T2 by the acceleration sensor (9) in a cycle T2, and comprising a fusion unit (10) which is configured to generate noise-reduced distance measurement values D(K-T3) in a cycle T3, in which the distance signals d(K-T1) and the acceleration signals b(K-T2) are combined, **characterised in that** at least one filter is provided, by means of which the distance signals d(K-T1) and the acceleration signals b(K-T2) are synchronised to a common clock T3 and are then combined with the clock T3 to form the noise-reduced distance measurement values D(K-T3), wherein all clocks T1, T2, T3 are different.

11. A method according to claim 10, **characterised in that** the device (1) is used in a static measurement arrangement.

12. A method according to claim 10, **characterised in that** the device (1) is used in a dynamic measurement arrangement.

13. A method according to any one of claims 10 to 12, **characterised in that** the distance measurement values generated by the device (1) are used for positioning.

## Revendications

1. Dispositif (1) de mesure de la distance comprenant un capteur de distance (3) et un capteur d'accélération (9), dans lequel des signaux de distance d(K-T1) sont générés selon un cycle T1 à l'aide du capteur de distance (3) et des signaux d'accélération b(K-T2) sont générés selon un cycle T2 à l'aide du capteur d'accélération (9), et comprenant une unité de fusion (10) qui est configurée pour générer des valeurs de mesure de distance à bruit réduit D(K-T3) selon un cycle d'horloge T3, dans lequel les signaux de distance d(K-T1) et les signaux d'accélération b(K-T2) sont combinés, **caractérisé en ce qu'**au moins un filtre est prévu, au moyen duquel les signaux de distance d(K-T1) et les signaux d'accélération b(K-T2) sont synchronisés sur une horloge commune T3, puis combinés avec l'horloge T3 pour former les valeurs de mesure de distance à bruit réduit D(K-T3), dans lequel toutes les horloges T1, T2, T3 sont différentes.

2. Dispositif (1) selon la revendication 1, **caractérisé en ce que** l'unité de fusion (10) est une unité de filtrage.

3. Dispositif (1) selon la revendication 2, **caractérisé en ce que** l'unité de filtrage est un filtre d'espace d'états.

4. Dispositif (1) selon la revendication 3, **caractérisé en ce que** l'unité de filtrage est un filtre de Kalman.

5. Dispositif (1) selon l'une des revendications 1 à 4, **caractérisé en ce que** le filtre au moyen duquel les signaux de distance d(K-T1) et les signaux d'accélération b(K-T2) sont synchronisés sur une horloge commune T3 est un filtre d'interpolation.

6. Dispositif (1) selon l'une des revendications 1 à 5, **caractérisé en ce que** le capteur de distance (3) est un capteur optique.

7. Dispositif (1) selon l'une des revendications 1 à 6, **caractérisé en ce qu'**il est prévu un capteur de distance (3) fonctionnant selon un procédé de temps de vol d'impulsion, un procédé de mesure de phase ou un procédé de triangulation.

8. Dispositif (1) selon l'une quelconque des revendications 1 à 7, **caractérisé en ce que** ses composants sont disposés dans un boîtier (2).

9. Dispositif (1) selon l'une quelconque des revendications 1 à 8, **caractérisé en ce qu'**il comprend une unité de commande et d'évaluation (11).

10. Procédé pour effectuer des mesures de distance à l'aide d'un dispositif (1) comprenant un capteur de distance (3) et un capteur d'accélération (9), dans lequel des signaux de distance d(K-T1) sont générés selon un cycle T1 par le capteur de distance (3) et des signaux d'accélération b(K-T2) sont générés selon un cycle T2 par le capteur d'accélération (9), et comprenant une unité de fusion (10) qui est configurée pour générer des valeurs de mesure de distance à bruit réduit D(K-T3) dans un cycle T3, dans lequel les signaux de distance d(K-T1) et les signaux d'accélération b(K-T2) sont combinés, **caractérisé en ce qu'**au moins un filtre est prévu, au moyen duquel les signaux de distance d(K-T1) et les signaux d'accélération b(K-T2) sont synchronisés sur une horloge commune T3, puis combinés avec l'horloge T3 pour former les valeurs de mesure de distance à bruit réduit D(K-T3), toutes les horloges T1, T2, T3 étant différentes.

11. Procédé selon la revendication 10, **caractérisé en ce que** le dispositif (1) est utilisé dans un dispositif de mesure statique.

12. Procédé selon la revendication 10, **caractérisé en ce que** le dispositif (1) est utilisé dans un dispositif de mesure dynamique.

13. Procédé selon l'une quelconque des revendications 10 à 12, **caractérisé en ce que** les valeurs de mesure de distance générées par le dispositif (1) sont utilisées pour le positionnement.
